# EUROPEAN PATENT APPLICATION

(11) **EP 1 106 449 A1**
(43) Date of publication of application: **13.06.2001**
(21) Application number: 00126526.3
(22) Date of filing: 11.12.2000
(51) Int. Cl.: B60R 22/12, B60R 22/48

(54) **Improved safety belt for vehicles**

(30) Priority: 10.12.1999 IT PD990284
(71) Applicant: Bruson, Simone, 35010 Vigonza (Prov. of Padova) (IT)
(72) Inventor: Bruson, Simone, 35010 Vigonza (Prov. of Padova) (IT)
(74) Representative: Modiano, Guido, Dr.-Ing.

(57) **Abstract**

A safety belt for vehicles, of the type constituted by a strap (10) which is rigidly coupled, with at least one end (11), to a region of the body of the vehicle and can be engaged, at its other end (13) or by means of an intermediate portion, with another region of the body, crossing a corresponding seat portion. The strap (10), at least in a portion between the two couplings to the body, comprises at least one portion (17) made of a material and/or having a color which is phosphorescent and/or fluorescent and/or photoluminescent and/or has a similar effect.

## Description

The present invention relates to an improved safety belt for vehicles.

It is well-known that one of the main causes of severe injury in road accidents is currently constituted by failure to fasten safety belts.

In Italy, as in many other countries, there is a law which requires motorists to fasten their seat belts during trips with vehicles.

However, this law is very scarcely enforced, both due to tolerance on the part of law enforcement authorities and due to undisputed difficulty in determining whether the belts are fastened or not from a stationary post while the vehicle is moving, particularly at night or in low-visibility conditions.

The aim of the present invention is to make it easier to identify safety belts when they are fastened, so as to give law enforcement authorities a better chance to adequately enforce the applicable law.

Within this aim, a consequent primary object is to ensure that a higher percentage of road users than at present fasten their safety belts.

Another object is to provide an improved safety belt which from a structural point of view and in terms of operation is similar to current ones, since it is fully compatible with them, to be applied both to new vehicles and as a replacement for old-type belts in vehicles already in use.

Another object is to provide a safety belt which can be manufactured at costs which are equivalent to those of current belts.

This aim and these and other objects which will become better apparent hereinafter are achieved by an improved safety belt for vehicles, of the type constituted by a strap which is rigidly coupled, with at least one end, to a region of the body of the vehicle and can be engaged, at its other end or by means of an intermediate portion, with another region of the body, crossing a corresponding seat portion, characterized in that said strap, at least in a portion between the two couplings to the body, comprises at least one portion made of a material and/or having a color which is phosphorescent and/or fluorescent and/or photoluminescent and/or has a similar effect.

Further characteristics and advantages of the invention will become better apparent from the following detailed description of an embodiment thereof, illustrated only by way of non-limitative example in the accompanying drawing, wherein:

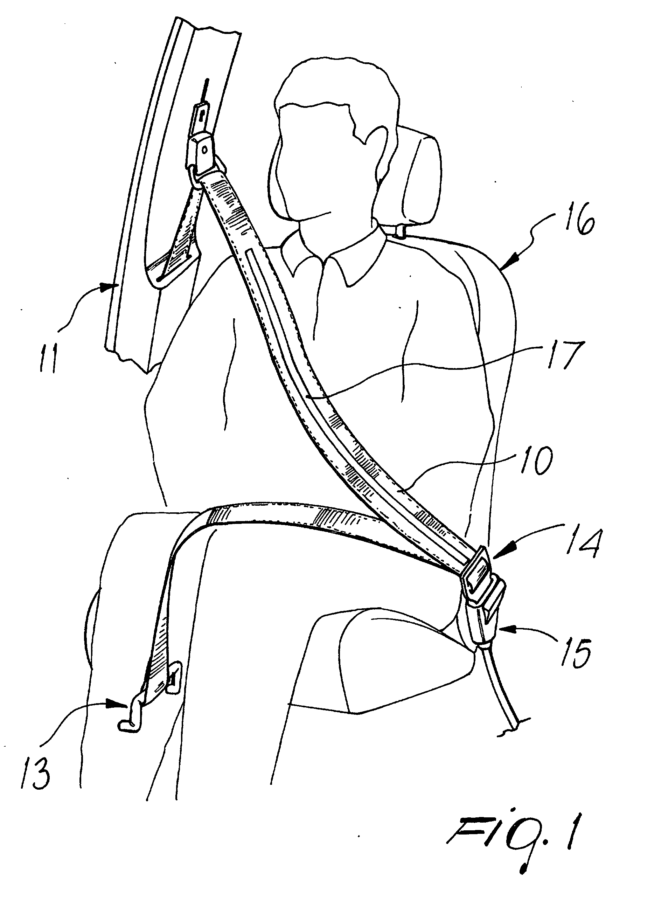

Figure 1 is a perspective view of a safety belt according to the invention, shown installed.

With reference to the figure, a safety belt for vehicles is constituted by a strap 10, usually made of synthetic fabric or the like, which is rigidly coupled, in the case of a so-called lap-shoulder belt for front seats, by means of one end 11 to a region of the body of the vehicle which is usually a door post 12, at a height which substantially corresponds to the portion between the shoulders and the head of the user.

Another end 13 is instead fixed to the base of said post 12, while a male element 14 can slide on an intermediate portion and can be coupled to a corresponding female element 15 in another region of the body, for example the base region that is intermediate between the two front seats, by crossing the seat 16.

There are also simple lap belts, not shown, which have a fixed end and an engageable end.

According to the invention, the strap 10, at least in a portion between the couplings to the body, comprises at least one portion 17 made of a material and/or having a color which is phosphorescent and/or fluorescent and/or luminescent.

The portion 17 can in fact be provided by appropriately coloring the fabric of the strap 10 or by weaving the normal fibers together with fibers whose color is phosphorescent and/or fluorescent and/or photoluminescent and/or has a similar effect.

Materials which absorb light rays and subsequently release them for a certain time are commercially available in bands or strips and are mainly used for safety reasons in the clothing of firemen, law enforcement authorities, road maintenance workers, et cetera.

There are also retroreflective materials which reflect the light when they are struck by it and assume the appearance of light sources.

These materials and the preceding ones, also available in very low thicknesses (less than one millimeter), can be joined and superimposed on the strap of the belt 10 by thermal bonding, stitching or gluing, without altering the structure of the belt, which as is known is subject to type approval.

As an alternative, the entire portion 18 may be made of phosphorescent and/or fluorescent and/or luminescent fabric.

In this manner, the portion of the safety belt that crosses the trunk region is easily visible from outside, particularly in the dark and/or with poor visibility, indeed due to the fluorescence and/or phosphorescence and/or luminescence of the material.

This allows law enforcement authorities to immediately detect users who are not wearing their safety belts and to therefore enforce the law more frequently.

Moreover, if car manufacturers were required to adopt the safety belts according to the invention, the applicable law would be more complied with, reducing the severity of injuries in road accidents.

In practice it has been observed that the intended aim and objects of the present invention have been achieved.

The invention thus conceived is susceptible of numerous modifications and variations, all of which are within the scope of the inventive concept.

All the details may furthermore be replaced with other technically equivalent elements.

In practice, the materials employed, so long as they are compatible with the contingent use, as well as the dimensions, may be any according to requirements.

The disclosures in Italian Patent application No. PD99A000284, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An improved safety belt for vehicles, of the type constituted by a strap which is rigidly coupled, with at least one end, to a region of the body of the vehicle and can be engaged, at its other end or by means of an intermediate portion, with another region of the body, crossing a corresponding seat portion, characterized in that said strap, at least in a portion between the two couplings to the body, comprises at least one portion made of a material and/or having a color which is phosphorescent and/or fluorescent and/or photoluminescent and/or has a similar effect.

2. The belt according to claim 1, characterized in that said portion made of a material and/or having a color which is phosphorescent and/or fluorescent and/or luminescent is constituted by at least one band and/or strip which is superimposed on the strap of said belt by thermal bonding, stitching or gluing.

3. The belt according to claim 1, characterized in that said portion is entirely made of phosphorescent and/or fluorescent and/or luminescent fabric.
